**Europäisches Patentamt**

**European Patent Office**

**Office européen des brevets**

(1) Publication number: **0 163 862**
**B1**

## (12) EUROPEAN PATENT SPECIFICATION

(45) Date of publication of patent specification: **27.12.90**

(51) Int. Cl.⁵: **G 11 B 5/265**

(21) Application number: **85104430.5**

(22) Date of filing: **11.04.85**

(54) **Magnetic head with stray flux compensation.**

(30) Priority: **12.04.84 JP 73174/84**
**12.04.84 JP 73175/84**

(43) Date of publication of application:
**11.12.85 Bulletin 85/50**

(45) Publication of the grant of the patent:
**27.12.90 Bulletin 90/52**

(84) Designated Contracting States:
**DE FR GB**

(56) References cited:
**DE-A-2 907 097**
**US-A-2 986 608**
**US-A-4 008 493**

**PATENT ABSTRACTS OF JAPAN, vol. 6, no. 183,**
**18th September 1982, page (P-143) (1061); &**
**JP-A-57-98124**

(73) Proprietor: **MITSUBISHI DENKI KABUSHIKI**
**KAISHA**
**2-3, Marunouchi 2-chome Chiyoda-ku**
**Tokyo 100 (JP)**

(72) Inventor: **Isozaki, Shin**
**2-18-25, Nishikamakura**
**Kamakura-shi Kanagawa 248 (JP)**

(74) Representative: **Strehl, Schübel-Hopf, Groening**
**Maximilianstrasse 54 Postfach 22 14 55**
**D-8000 München 22 (DE)**

Courier Press, Leamington Spa, England.

## Description

The invention relates to a magnetic disk apparatus including a magentic head comprising a read/write head having a read/write coil and an erase head having an erase coil through which a DC erase current flows during the write mode. Such a device is known from JP—A—57-98124 (Patent Abstracts of Japan, Vol. 6 No. 183 (P-143) (1061)).

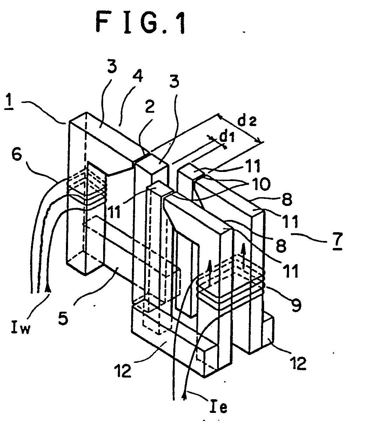

Fig. 1 of the drawings shows the basic construction of a magnetic head in a flexible disk drive apparatus. A read/write head 1 comprises a core assembly 4 including a pair of cores 3 opposing each other with a R/W head gap 2, a bridging bar 5 which bridges both cores 3, 3 to form a magnetic path and a read/write coil 6 wound on one of the cores 3. The coil 6 is adapted to be energized with a write current lw.

An erase head 7 is apart from the read/write head 1 by a distance d1. The erase head 7 comprises a pair of core assemblies 8 opposing each other with a space equal to the width of the core 3 so that the center axis between the cores 8 is aligned with the cores 3 and an erase coil 9 wound on the core assembly 8. The erase coil is adapted to be energized with a DC current le to build a DC magnetic field. Each core assembly 8 includes a bridge bar 12 which bridges both cores 11 opposing each other with an erase gap 10.

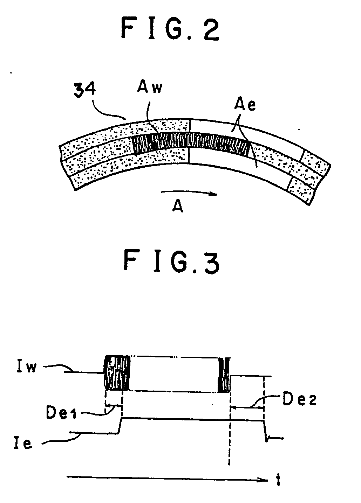

In the apparatus constructed in such a manner, data are stored on the magnetic disk 34 by the read/write head 1 to form a data storing track Aw by rotating the magnetic disk in a direction as shown by an arrow A in Fig. 2. At both sides of the data storing track A, the magnetic disk is erased by the erase head 7 to form erased tracks Ae. This enables to prevent the data from deterioration due to crosstalk of previous stored data even if the position of the read/write head 1 is slightly shifted when the stored data are read out.

In the described apparatus, when one data block unit which as called a sector is written along one track on the magnetic disk as shown in Fig. 2, simultaneous cutting in of the write current lw and the erase current le causes a shift between the data track zone Aw and the track zones Ae because of the distance d2 between the R/W head gap 2 and the erase gap 10. Accordingly, time delays De1 and De2 are usually provided for the erase current le at the beginning and the end of the write operation respectively as shown in Fig. 3 so that the data storing track Aw is covered by the erase track zones Ae at both sides.

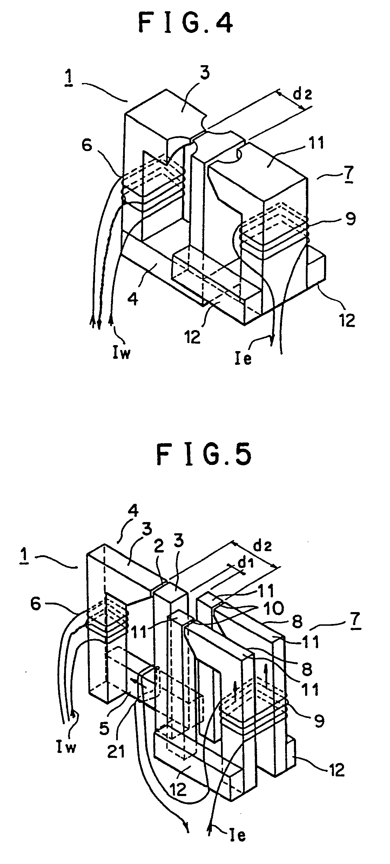

Since transition of magnetic field due to turning off the erase current le at the end of the erase delay time De2 induces the generation of noise voltages in the R/W coil 6 on the read/write head 1, it makes it difficult to read the subsequent sector for the interval of the erase delay time De2. Accordingly, it is necessary to provide a space at least equal to the length d2 between the adjacent sectors. It is therefore required to decrease the length d2 as far as possible to efficiently use tracks on the magnetic disk 34. The common integration of the core 3 of the read/write head 1 and the core 11 of the erase head 7 as shown in Fig. 4 has been proposed in order to provide a decreased length d2.

Decreasing the length d2 however involves disadvantages in that the fabrication of cores is difficult due to small size of core as well as that the DC magnetic field of the erase head z is readily coupled with the read/write head, resulting in an asymmetry in the wave form recorded on the disk. By asymmetry, it is meant a difference in the length of the magnetized region on the magnetic disk even if write currents which are positively and negatively symmetrical are applied. This lowers the read margin of the data since the peak position is shifted.

The length d2 is usually in the order of 0.9 mm. Increase in ampere turn of the erase coil 9 for sufficiently increase the erasure efficiency of the erase head under such length d2 involves some disadvantages.

For reducing errors at readout, it is known to provide a leakage magnetic flux cancellation coil 21 wound on the bridging bar 5 of the core 3 forming the read/write head 1 and being in series connected with the erase coil 9, as shown in Fig. 5. The coil 21 can cancel the leakage magnetic flux from the erase coil 9 if the number of the turns of the coil 21 is properly adjusted.

The operation of the magnetic disk apparatus constructed in such a manner will be described as follows.

At the erase gap 10 the DC magnetic field generated from the erase coil 9 does not only erase the data at both sides of the data track on the magnetic disk, but also will give magnetic influence upon the cores 3 of the read/write head by the leakage flux. In accordance with the present construction, DC current also flows through the leakage magnetic flux cancellation coil 21 so that the magnetic flux generated from the coil 21 can cancel the leakage magnetic flux. As a result, the cores 3 of the read/write head 1 generates a magnetic field in response to inherent write current lw, enabling write operation which has positive and negative symmetry proportional to write current.

From the JP—A—57-98124 mentioned above, it is known to add a correction coil to the read/write head similarly as shown in Fig. 5. According to this reference, the cancelling current can be adjusted by a variable resistor connected to the correction coil.

It is an object of the present invention to provide a magnetic disk apparatus in which adverse influence due to the leakage magnetic flux from an erase head is reduced.

In accordance with the present invention, the magnetic disk apparatus mentioned at the beginning is therefore characterized in that said read/write coil is provided with a center tap to divide the read/write coil into a first and a second section, that write currents are caused to flow alternately through the first section and the second section of the read/write coil during the write mode of the read/write head, and that a DC current is caused to flow through the first section of the read/write coil during the write mode to generate a flux for cancelling a leakage flux to the read/write head from the erase head.

Thus, according to the invention, the cancelling coil is formed by a part of the read/write coil on the read/write head. The part of the read/write coil forming the cancelling coil is located between one end and the center tap of the read/write coil.

In accordance with the present invention, the leakage magnetic flux cancelling coil is energized for generating such a magnetic flux that it cancels the leakage magnetic flux from the erase head. Accordingly, adverse influence due to leakage magnetic flux is reduced.

Preferred features of the magnetic disk apparatus given above are included in attached subclaims 2 to 5.

An embodiment of the present invention will be described with reference to the drawings, in which:

Fig. 1 is a perspective view showing a known magnetic disk apparatus;

Fig. 2 is a schematic view showing a disk bearing a data storing track and erase tracks at both sides of the data storing track;

Fig. 3 is a time chart showing a write signal and an erase signal;

Figs. 4 and 5 are perspective views each showing a further known magnetic disk apparatus;

Figs. 6 and 7 are perspective views showing an embodiment of the magnetic disk apparatus of the present invention; and

Fig. 8 is a circuit diagram showing a read/write amplifying circuit and an erase switch circuit.

In the following description, components same as those of the known devices are designed with like reference numerals, and the description thereof is omitted therein.

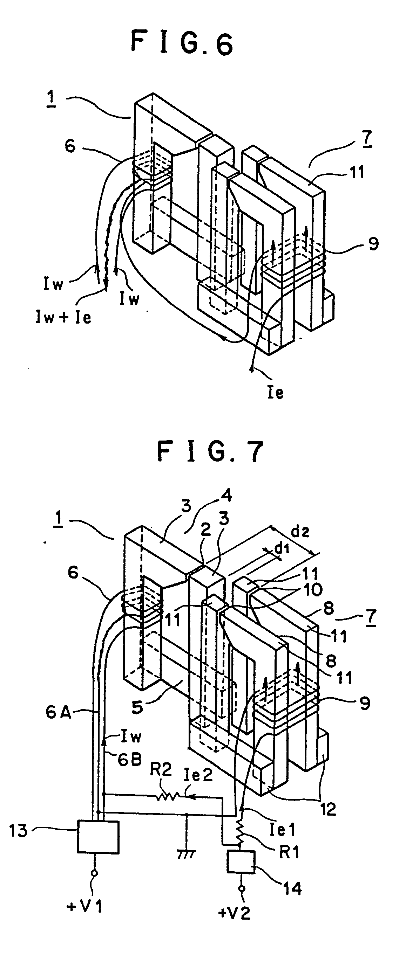

According to the invention, the read/write coil 6 is provided with a center tap as shown in Fig. 6. A DC current is caused to flow across the center tap and one end of the coil 6 for cancelling the leakage magnetic flux from the erase head 7.

Fig. 7 shows the embodiment of the magnetic disk apparatus of the present invention in more detail. The magnetic disk apparatus comprises a read/write head 1, an erase head 7, a read/write amplifying and erase switch circuits 13 and 14.

The read/write head 1 comprises a core assembly 4 including a pair of cores 3 and a bridge rod 5 which bridges both cores 3 and a read/write coil 6 through which a write current Iw flows.

The erase head 7 which is apart from the read/write head 1 by a distance d1 comprises a pair of core assemblies 8 which oppose each other with a gap equal to the width of the core, the core 3 being aligned with the center axis between the core assemblies 8 and an erase coil 9 wound on the core assemblies 8 and through which an erase current Ie flows. Each core assembly 8 includes cores opposing each other with an erase gap 10 and a bridge rod 12 which bridges the cores 11 for forming a magnetic path.

The read/write amplifying circuit 13 which is connected with the read/write coil 6 amplifies read/write signals. The erase switch circuit 14 which is connected with the erase coil 9 via a resistor R1 is adapted to energize or deenergize the erase head 7 by turning on or off, whereby data storing track in which the data are written by the read/write head 1 is erased at the both sides thereof with a DC magnetic flux.

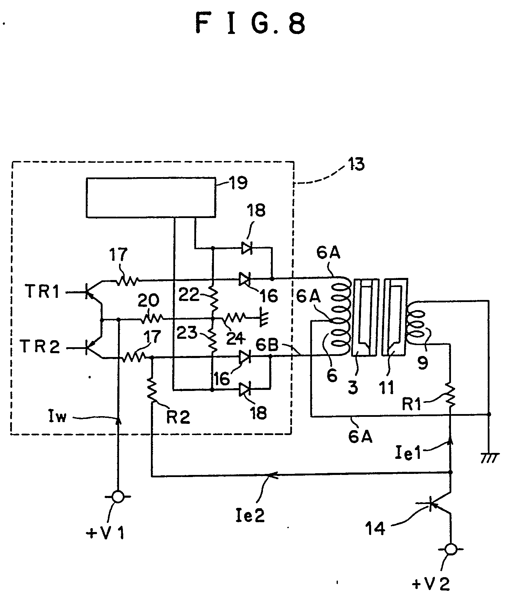

Fig. 8 shows the structure of the read/write amplifying circuit 13 and the erase switch circuit 14 in more detail a pair of PNP type write amplifying transistors TR1 and TR2, have emitters which are connected with each other and connected with a power supply +V1 and have bases to which write signals are alternatingly applied to alternatingly turn on or off the transistors TR1 and TR2 in write-operation.

Each of diodes 16 has an anode which is connected with the collector of the write amplifying transistors TR1 and TR2 via resistor 17 and has a cathode which is connected with one end of the read/write coil 6 wound on the core 3. The read/write coil 6 has a center tap 6A which is grounded.

Each of diodes 18 has a cathode connected with one end of the read/write coil 6 in parallel relationship with the diodes 16 and has an anode connected with a read signal amplifier 19.

A voltage is applied from the power supply +V1 to the anodes of the diodes 18 via resistors 20, 22, 23 and 24.

The erase switch circuit 14 comprises a PNP type switching transistor having an emitter connected with a power supply +V2 and a collector connected with the erase coil 9 wound on the cores 11 via the resistor R1.

A resistor R2 is connected across the power supply +V2 through erase switch 14 and the other terminal 6B of the read/write coil 6 so that the DC current from the power supply +V2 is supplied across the center tap 6A and the other terminal 6B. The resistor R2 forms a cancelling circuit by-passing the DC current supplied to the erase coil 9 to the read/write coil 6.

The erase current supplied to the erase coil 9 is represented as follows:

$$Ie1 = V2/R1$$

While the erase switch circuit 14 is turned on, the current Ie2(Ie2=V2/R2) is superposed across one terminal 6B and the center tap of the read/write coil 6. Accordingly the magnetic flux due to the current Ie2 can cancel the leakage magnetic flux generated from the erase head 7. Since the current superposed on the read/write coil 6 is very small, it will not interfere the write-operation and will not give any influence in read-operation when Ie2 is cut off. When the write-operation is carried out, either one of the transistors TR1 and TR2 is alternatingly turned on in response to the write information to conduct the

write current lw through the read/write coil 6 via diodes 16. When the erase switch circuit 14 is rendered conductive at this time, one half of the read/write coil 6 is energized with a current flowing via the resistors R2 and the diode 16 so that the core 3 is DC magnetized for cancelling the leakage magnetic flux from the erase coil 9. In read-operation of the write amplifying transistors TR1, TR2 and erase switch circuit 14 are nonconductive and the diodes 18 are rendered conductive by the very small current supplied from the power supply +V1 via the resistors 20, 22, 23 and 24 so that the read signal of the read/write coil 6 is amplified by the signal amplifier 19. As described above, the cancellation current is not applied in read operation.

Although the compensation for the leakage magnetic flux due to current supplied to the magnetic disk apparatus having a structure shown in Fig. 6 has been described in the above-embodiment, it is apparent that this current compensation is applicable to other erase-read/write combination having any head structure.

**Claims**

1. A magnetic disk apparatus including a magnetic head comprising:
a read/write head (1) having a read/write coil (6); and
an erase head (7) having an erase coil (9) through which a DC erase current flows during the write mode; characterized in
that said read/write coil (6) is provided with a center tap (6A) to divide the read/write coil (6) into a first and a second section;
that write currents are caused to flow alternately through the first section and the second section of the read/write coil (6) during the write mode of the read/write head (1); and
that a DC current is caused to flow through the first section (6B—6A) of the read/write coil (6) during the write mode to generate a flux for cancelling a leakage flux to the read/write head (1) from the erase head (7).

2. An apparatus according to claim 1, characterized by
a read/write amplifying circuit (13) connected between a first power supply (+V1) and the read/write coil (6) for amplifying read/write signals, and by
an erase switch circuit (14) connected between a second power supply (+V2) and the erase coil (9) for superposing, when switched on, said DC cancelling current (le2) across one terminal (6B) and the center tap (6A) of the read/write coil (6).

3. An apparatus according to claim 2, characterized in that the erase switch circuit (14) is connected with the erase coil (9) via a first resistor (R1) and that it is connected with said one terminal (6B) of the read/write coil (6) via a second resistor (R2).

4. An apparatus according to claim 2, characterized in that the read/write amplifying circuit (13) includes

a pair of write amplifying transistors (TR1, TR2) having emitters which are connected with each other and are connected with said first power supply (+V1) and which are alternatingly turned on and off in write operation,
first diodes (16) which are connected each with the collector of the write amplifying transistors via a resistor (17) and having a cathode which is connected with one end of the read/write coil (6), respectively, and
second diodes (18) each having a cathode connected with one end of the read/write coil (6) in parallel relationship with the first diodes (16) and each having an anode connected with a read signal amplifier (19), a voltage being applied from said first power supply (+V1) to the anodes of the second diodes (18) via third resistors (20, 22, 23, 24).

5. An apparatus according to claim 2, characterized in that the erase switch circuit (14) includes a switching transistor having an emitter connected with said second power supply (+V2) and a collector connected with the erase coil (9) via the first resistor (R1).

**Patentansprüche**

1. Magnetplattenvorrichtung mit einem Magnetkopf mit einem Schreib/Lesekopf (1) mit einer Schreib/Lesespule (6); und
einem Löschkopf (7) mit einer Löschspule (9), durch die im Schreibmodus ein Gleichstrom-Löschstrom fließt; dadurch gekennzeichnet,
daß die Schreib/Lesespule (6) einen Mittenabgriff (6A) aufweist, der die Schreib/Lesespule (6) in einen ersten und einen zweiten Abschnitt aufteilt;
daß im Schreibmodus des Schreib/Lesekopfes (1) Schreibströme abwechselnd durch den ersten Abschnitt und den zweiten Abschnitt der Schreib/Lesespule (6) fließen; und
daß im Schreibmodus durch den ersten Abschnitt (6B—6A) der Schreib/Lesespule (6) eine Gleichstrom fließt, um einen Fluß zu erzeugen, der einen Leckfluß vom Löschkopf (7) zum Schreib/Lesekopf (1) aufhebt.

2. Vorrichtung nach Anspruch 1, gekennzeichnet durch eine Schreib/Lese-Verstärkungsschaltung (13), die zwischen eine erste Stromversorgung (+V1) und die Schreib/Lesespule (6) geschaltet ist, um Schreib/Lesesignale zu verstärken, und durch
eine Lösch-Schalter-Schaltung (14), die zwischen eine zweite Stromversorgung (+V2) und die Löschspule (9) geschaltet ist, um im eingeschalteten Zustand den Gleichstrom-Löschstrom (le2) über einen Anschluß (6B) und den Mittenabgriff (6A) der Schreib/Lesespule (6) einzuprägen.

3. Vorrichtung nach Anspruch 2, dadurch gekennzeichnet, daß die Lösch-Schalter-Schaltung (14) mit der Löschspule (9) über einen ersten Widerstand (R1) und mit dem einen Anschluß (6B) der Schreib/Lesespule (6) über einen zweiten Widerstand (R2) verbunden ist.

4. Vorrichtung nach Anspruch 2, dadurch gekennzeichnet, daß die Schreib/Lese-Verstärkungsschaltung (13) enthält

ein Paar von Schreib-Verstärkungstransistoren (TR1, TR2) mit Emittern, die miteinander verbunden sind und die an die erste Stromversorgung (+V1) angeschlossen sind, die beim Schreibvorgang abwechselnd ein- und ausgeschaltet werden,

erste Dioden (16), die jeweils über einen Widerstand (17) mit dem Kollektor der Schreib-Verstärkungstransistoren verbunden sind und die eine Kathode haben, die jeweils an ein Ende der Schreib/Lesespule (6) angeschlossen ist, und

zweite Dioden (18), deren Kathode parallel zu den ersten Dioden (16) jeweils mit einem Ende der Schreib/Lesespule (6) verbunden ist und die jeweils eine Anode haben, die an einen Lesesignalverstärker (19) angeschlossen ist, wobei von der ersten Stromversorgung (+V1) über dritte Widerstände (20, 22, 23, 24) eine Spannung an den Anoden der zweiten Dioden (18) anliegt.

5. Vorrichtung nach Anspruch 2, dadurch gekennzeichnet, daß die Lösch-Schalter-Schaltung (14) einen Schalttransistor enthält, der einen Emitter, der mit der zweiten Stromversorgung (+V2) verbunden ist, und einen Kollektor aufweist, der über den ersten Widerstand (R1) an die Löschspule (9) angeschlossen ist.

**Revendications**

1. Appareil à disque magnétique comprenant une tête magnétique qui comporte:

une tête (1) de lecture-écriture ayant un bobinage (6) de lecture-écriture, et

une tête d'effacement (7) ayant un bobinage (9) d'effacement dans lequel circule un courant continu d'effacement en mode d'écriture, caractérisé en ce que:

le bobinage (6) de lecture-écriture a une prise centrale (6A) qui divise le bobinage (6) de lecture-écriture en un premier et un second tronçon,

les courants d'écriture circulent en alternance dans le premier tronçon et dans le second tronçon du bobinage (6) de lecture-écriture en mode d'écriture de la tête (1) de lecture-écriture, et

un courant continu circule dans le premier tronçon (6B—6A) du bobinage (6) de lecture-écriture en mode d'écriture afin qu'il crée un flux de compensation d'un flux de fuite de la tête d'effacement (7) vers la tête (1) de lectureécriture.

2. Appareil selon la revendication 1, caractérisé par:

un circuit amplificateur de lecture-écriture (13) connecté entre une première alimentation (+V1) et le bobinage de lecture-écriture (6) afin que les signaux de lecture-écriture soient amplifiés, et

un circuit de commutation d'effacement (14) connecté entre une seconde alimentation (+V2) et le bobinage d'effacement (9) afin que, lorsqu'il est à l'état conducteur, il superpose le courant continu de compensation (Ie2) entre une borne (6B) et la prise centrale (6A) du bobinage de lecture-écriture (6).

3. Appareil selon la revendication 2, caractérisé en ce que le circuit de commutation d'effacement (14) est connecté au bobinage d'effacement (9) par une première résistance (R1), et il est connecté à la première borne précitée (6B) du bobinage de lecture-écriture (6) par une seconde résistance (R2).

4. Appareil selon la revendication 2, caractérisé en ce que le circuit d'amplification de lecture-écriture (13) comporte:

deux transistors amplificateurs d'écriture TR1, TR2) ayant des émetteurs qui sont connectés l'un à l'autre et à la première alimentation (+V1) et qui sont mis en alternance à l'état conducteur et à l'état non conducteur pendant l'opération d'écriture,

des premières diodes (16) qui sont connectées chacune au collecteur des transistors amplificateurs d'écriture par l'intermédiaire d'une résistance (17) et ayant une cathode qui est connectée à une première extrémité du bobinage de lecture-écriture (6), et

des secondes diodes (18) ayant chacune une cathode connectée à une première extrémité du bobinage de lecture-écriture (6) en parallèle avec les premières diodes (16) et ayant chacune une anode connectée à un amplificateur (19) de signaux de lecture, une tension étant appliquée par la première alimentation (+V1) aux anodes des secondes diodes (18) par l'intermédiaire de troisièmes résistances (20, 22, 23, 24).

5. Appareil selon la revendication 2, caractérisé en ce que le circuit de commutation d'effacement (14) comporte un transistor de commutation ayant un émetteur connecté à la seconde alimentation (+V2) et un collecteur connecté au bobinage d'effacement (9) par l'intermédiaire de la première résistance (R1).

# FIG.1

# FIG. 2

# FIG. 3

# F I G. 4

# F I G. 5

3

# F I G. 6

# F I G. 7

# FIG.8